# EUROPEAN PATENT APPLICATION

(11) **EP 4 578 716 A1**
(43) Date of publication of application: **02.07.2025**
(21) Application number: 23858971.7
(22) Date of filing: 19.07.2023
(51) Int. Cl.: B60L 53/20, H02J 3/18

(54) **CHARGER CONTROL METHOD AND APPARATUS, AND CHARGER AND VEHICLE**

(30) Priority: 30.08.2022 CN 202211049272
(71) Applicant: BYD Company Limited, Shenzhen, Guangdong 518118 (CN)
(72) Inventor: WANG, Chao, Shenzhen, Guangdong 518118 (CN); LIU, Weidong, Shenzhen, Guangdong 518118 (CN); WANG, Xinghui, Shenzhen, Guangdong 518118 (CN)
(74) Representative: Taor, Simon Edward William
(86) International application number: PCT/CN2023/108247
(87) International publication number: WO 2024/045935

(57) **Abstract**

A charger control method and apparatus, and a charger and a vehicle. The method is applied to a charger, which is a vehicle-mounted charger or a charging-pile charger. The method comprises: determining a target current value of an alternating-current side according to the current voltage of the alternating-current side of a charger and a target steady-state current; correcting the target current value by using a current correction amount of the alternating-current side; and controlling the current of the alternating-current side according to the corrected target current value, the current voltage, the current current of the alternating-current side and a bus capacitance voltage, so that the current of the alternating-current side follows the collected target current value. **In** this way, a deviation of a current of a positive half cycle of an alternating-current side from a current of a negative half cycle thereof is avoided, thereby achieving a final purpose of adjusting the degree of balance of the actual current of the alternating-current side, that is, achieving dynamic balance of an alternating-current.

## Description

### CROSS-REFERENCE TO RELATED APPLICATIONS

The present disclosure claims priority to and benefits of Chinese Patent Application No. 202211049272.1, entitled "CHARGER CONTROL METHOD AND DEVICE, CHARGER AND VEHICLE" and filed on August 30, 2022. The entire content of the above-referenced application is incorporated herein by reference.

### FIELD

The present disclosure relates to the field of vehicle technologies, and specifically, to a charger control method and apparatus, a charger, and a vehicle.

### BACKGROUND

An on-board charger is an electronic device converting an alternating-current into a direct current and is used as an on-board charging device of an electric vehicle to supply power to a battery. A two-stage topological structure is usually used in existing on-board chargers, where a pre-stage circuit is a power factor correction circuit, and a post-stage circuit is an isolated DCDC circuit (that is, an LCC circuit (resonant circuit)), and an instantaneous power difference between an alternating-current side and a direct-current side is balanced through a bus capacitor between the two-stage circuits.

The on-board charger performs charging control according to a sampled voltage and a sampled current on the alternating-current side that are collected by a sampling circuit on the alternating-current side. However, due to existence of a hardware sampling error in the sampling circuit, a deviation may occur between a current of a positive half cycle and a current of a negative half cycle on the alternating-current side, that is, an alternating-current may be unbalanced.

### SUMMARY

To overcome problems existing in the related art, the present disclosure provides a charger control method and apparatus, a charger, and a vehicle.

To achieve the foregoing objectives, according to a first aspect, the present disclosure provides a charger control method. The method is applied to a charger, and the charger is an on-board charger or a charging pile charger. The method includes:
determining a target current value on an alternating-current side according to a current voltage and a steady-state target current on the alternating-current side of the charger;
correcting the target current value by using a current correction amount on the alternating-current side; and
controlling a current on the alternating-current side according to a corrected target current value, the current voltage, a current current on the alternating-current side, and a voltage of a bus capacitor, to cause the current on the alternating-current side to follow the corrected target current value.

Optionally, the current correction amount on the alternating-current side is determined in the following manner:
consecutively collecting a first preset quantity of currents on the alternating-current side according to a first sampling periodicity; and
determining the current correction amount on the alternating-current side according to the first preset quantity of currents on the alternating-current side.

Optionally, the determining the current correction amount on the alternating-current side according to the first preset quantity of currents on the alternating-current side includes:
determining an average value of the first preset quantity of currents on the alternating-current side as the current correction amount on the alternating-current side.

Optionally, the first preset quantity is an integer multiple of a quotient of a current periodicity on the alternating-current side and the first sampling periodicity, where the first sampling periodicity is far less than the current periodicity on the alternating-current side.

Optionally, the current voltage and the current current on the alternating-current side of the charger are obtained in the following manner:
determining the current voltage on the alternating-current side according to a current voltage AD value on the alternating-current side of the charger collected by a sampling circuit on the alternating-current side, and determining the current current on the alternating-current side according to a current current AD value on the alternating-current side collected by the sampling circuit on the alternating-current side; and
the method further includes:
   performing zero-point correction on the sampling circuit on the alternating-current side when the charger is powered on.

Optionally, the performing zero-point correction on the sampling circuit on the alternating-current side includes:
correcting a sampled voltage AD value and/or sampled current AD value of the sampling circuit on the alternating-current side, to implement zero-point correction on the sampling circuit on the alternating-current side.

Optionally, the correcting a sampled voltage AD value and/or sampled current AD value of the sampling circuit on the alternating-current side includes:
consecutively collecting a second preset quantity of voltage AD values and/or current AD values on the alternating-current side according to a second sampling periodicity;
determining a correction amount of the sampled voltage AD value of the sampling circuit on the alternating-current side according to the second preset quantity of voltage AD values on the alternating-current side, and/or determining a correction amount of the sampled current AD value of the sampling circuit on the alternating-current side according to the second preset quantity of current AD values on the alternating-current side; and
correcting the sampled voltage AD value according to the correction amount of the sampled voltage AD value, and/or correcting the sampled current AD value according to the correction amount of the sampled current AD value.

According to a second aspect, the present disclosure provides a charger control apparatus. The charger control apparatus includes:
a memory, having a computer program stored therein; and
a controller, the controller, when executing the computer program, implementing the steps of the charger control method according to the first aspect of the present disclosure.

According to a third aspect, the present disclosure provides a charger. The charger includes a power factor correction circuit, a bus capacitor, and an LLC circuit that are connected sequentially. The charger further includes:
the charger control apparatus according to the second aspect of the present disclosure, where the charger control apparatus is connected to the power factor correction circuit and the LLC circuit separately.

According to a fourth aspect, the present disclosure provides a vehicle, including a battery and the charger according to the third aspect of the present disclosure.

In the foregoing technical solutions, the target current value on the alternating-current side is determined according to the current voltage and the steady-state target current on the alternating-current side of the charger; the target current value is then corrected by using the current correction amount; and the current on the alternating-current side is finally controlled according to the corrected target current value, the current voltage on the alternating-current side, the current current on the alternating-current side, and the voltage of the bus capacitor, to cause the current on the alternating-current side to follow the corrected target current value, thereby implementing power factor correction. The target current value is corrected by using the current correction amount, so that the accuracy of the corrected target current value can be ensured, and the current on the alternating-current side can closely follow the corrected target current value, thereby avoiding a deviation from occurring between a current of a positive half cycle and a current of a negative half cycle on the alternating-current side, and achieving a final objective of adjusting a degree of balance of an actual current on the alternating-current side, that is, achieving dynamic balance of an alternating-current.

Other features and advantages of the present disclosure will be described in detail in the following specific implementations.

### BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and constitute no limitation on the present disclosure. In the accompanying drawings:
FIG. 1 is a structural block diagram of a charger according to an exemplary embodiment.
FIG. 2 is a diagram of a circuit topology structure of a charger according to an exemplary embodiment.
FIG. 3 is a flowchart of a charger control method according to an exemplary embodiment.
FIG. 4 is a schematic diagram of a charger control method according to an exemplary embodiment.

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

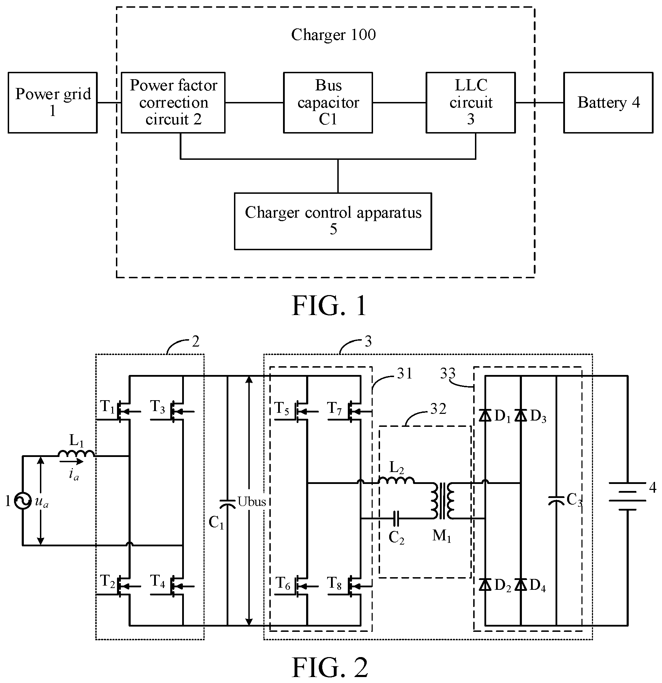

The present disclosure provides a charger. The charger may be an on-board charger or a charging pile charger, and the charging pile charger and the on-board charger may adopt a same circuit topology structure (as shown in FIG. 2). As shown in FIG. 1, the charger 100 includes a charger control apparatus 5, and a power factor correction circuit 2, a bus capacitor C1, and an LLC circuit 3 that are connected sequentially. The power factor correction circuit 2 is connected to a power grid 1, the LLC circuit 3 is configured to be connected to a battery 4, and the bus capacitor C1 may be an electrolytic capacitor, a film capacitor, a ceramic capacitor, or the like and configured to filter a direct current voltage.

The charger control apparatus 5 is connected to the power factor correction circuit 2 and the LLC circuit 3 separately, and is configured to perform a charger control method applied to the charger, to control the power factor correction circuit 2 and the LLC circuit 3 to work, so as to charge the battery. The power factor correction circuit 2 is configured to perform power factor correction on an input signal of the power grid and output a current signal obtained through the power factor correction; and the LLC circuit 3 is configured to perform direct current conversion on the current signal obtained through the power factor correction, to obtain a direct current so as to charge the battery of a vehicle.

As shown in FIG. 2, the power factor correction circuit 2 may include: a third-phase bridge arm formed by a first switch tube T1 and a second switch tube T2, and a fourth-phase bridge arm formed by a third switch tube T3 and a fourth switch tube T4, where a midpoint of the third-phase bridge arm is connected to a positive electrode of the power grid 1 through an inductor L1, and a midpoint of the fourth-phase bridge arm is connected to a negative electrode of the power grid 1; and a third bus end of the third-phase bridge arm and the fourth-phase bridge arm is connected to an end of the bus capacitor C1, and a fourth bus end of the third-phase bridge arm and the fourth-phase bridge arm is connected to another end of the bus capacitor C1.

A current voltage on an alternating-current side of the charger is *uₐ*, a current current on the alternating-current side of the charger is *iₐ*, and a voltage of the bus capacitor is Ubus.

As shown in FIG. 2, the LLC circuit 3 includes an inverter circuit 31, a resonant circuit 32, and a rectifier circuit 33 that are connected sequentially.

The inverter circuit 31 includes: a first-phase bridge arm formed by a fifth switch tube T5 and a sixth switch tube T6, and a second-phase bridge arm formed by a seventh switch tube T7 and an eighth switch tube T8, where a first bus end of the first-phase bridge arm and the second-phase bridge arm is connected to the end of the bus capacitor C1 and the third bus end separately, and a second bus end of the first-phase bridge arm and the second-phase bridge arm is connected to the another end of the bus capacitor C1 and the fourth bus end separately.

The resonant circuit 32 adopts an LLC resonant cavity, and includes a resonant inductor L2, a resonant capacitor C2, and a transformer M1. An end of the resonant inductor L2 is connected to a midpoint of the first-phase bridge arm, and another end is connected to a first input end on a primary side of the transformer M1, where the resonant inductor L2 may be magnetically integrated with the transformer M1 to participate in resonance in the resonant circuit. An end of the resonant capacitor C2 is connected to a midpoint of the second-phase bridge arm, and another end is connected to a second input end on the primary side of the transformer M1, where the resonant capacitor C2 may be a film capacitor or a ceramic capacitor, to prevent a direct-current offset of the transformer M1 and participate in resonance in the resonant circuit. The transformer M1 may be a tapped transformer and configured for electric energy isolation transmission.

The rectifier circuit 33 includes a fifth-phase bridge arm formed by a first diode D1 and a second diode D2, a sixth-phase bridge arm formed by a third diode D3 and a fourth diode D4, and a filter capacitor C3. A midpoint of the fifth-phase bridge arm is connected to a first input end on a secondary side of the transformer M1, and a midpoint of the sixth-phase bridge arm is connected to a second input end on the secondary side of the transformer M1. A fifth bus end of the fifth-phase bridge arm and the sixth-phase bridge arm is connected to an end of the filter capacitor C3 and the positive electrode of the battery 4 separately, and a sixth bus end of the fifth-phase bridge arm and the sixth-phase bridge arm is connected to another end of the filter capacitor C3 and the negative electrode of the battery 4 separately. The filter capacitor C3 is a capacitor on a battery side and is configured to filter a direct current voltage on the battery side.

In addition, it should be noted that, the rectifier circuit 33 may use a switch tube device or a rectifier diode (as shown in FIG. 2) to implement electric energy transmission.

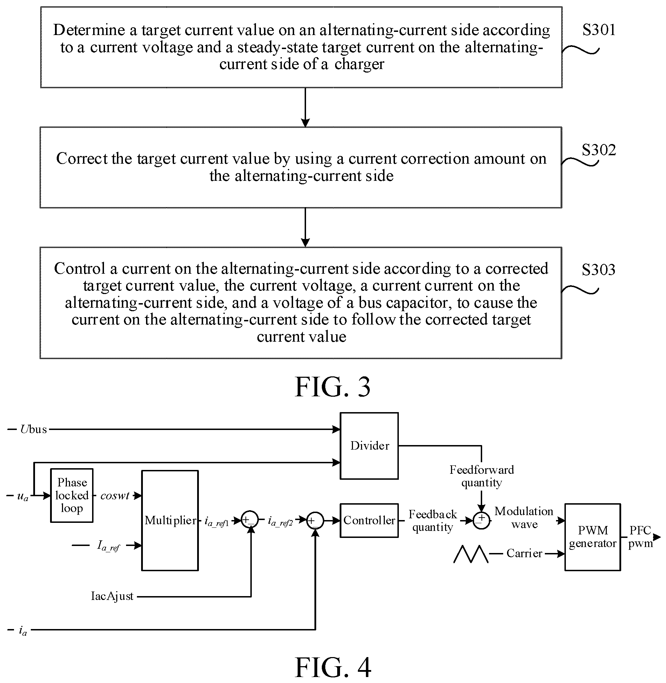

The following describes the charger control method applied to the charger in detail. As shown in FIG. 3, the method may include S301 to S303.

S301. A target current value on an alternating-current side is determined according to a current voltage and a steady-state target current on the alternating-current side of the charger.

In the present disclosure, the current voltage on the alternating-current side may be determined according to a current voltage analog to digital (AD) value on the alternating-current side of the charger collected by a sampling circuit on the alternating-current side. The voltage AD value is a corresponding digital signal value obtained through conversion by an analog to digital converter (ADC).

In an implementation, a current voltage corresponding to the current voltage AD value may be determined according to a conversion relationship between voltages on the alternating-current side and voltage AD values.

For example, the voltage on the alternating-current side is equal to a sum of b1 and a product of k1 and the voltage AD value on the alternating-current side.

In addition, the steady-state target current is a current value corresponding to the alternating-current side of the charger when the charger is in a stable and efficient optimal working state.

Specifically, a phase of an alternating-current outputted by the power grid may be extracted according to the current voltage *uₐ* (that is, a voltage of the current outputted by the power grid). For example, a product of the steady-state target current and the phase of the alternating-current outputted by the power grid may be determined as the target current value. As shown in FIG. 4, if the steady-state target current is *I_{a_ref},* and the phase of the alternating-current outputted by the power grid and determined based on a phase locked loop is cos *wt*, *I_{a_ref}* * cos *wt* may be determined as the target current value *I*_{*a_ref*1}*.*

S302. The target current value is corrected by using a current correction amount on the alternating-current side.

For example, as shown in FIG. 4, a difference between the target current value *I*_{*a_ref*1} and the current correction amount IacAjust may be determined as a corrected target current value *I*_{*a_ref*2}*.*

S303. A current on the alternating-current side is controlled according to a corrected target current value, the current voltage, a current current on the alternating-current side, and a voltage of a bus capacitor, to cause the current on the alternating-current side to follow the corrected target current value.

In the present disclosure, the current current on the alternating-current side may be determined according to a current current analog to digital (AD) value on the alternating-current side collected by the sampling circuit on the alternating-current side.

In an implementation, a current current corresponding to the current current AD value may be determined according to a conversion relationship between currents on the alternating-current side and current AD values, where the current AD value is a digital signal value obtained through conversion by the ADC.

For example, the current on the alternating-current side is equal to a sum of b2 and a product of k2 and the current AD value on the alternating-current side.

Specifically, as shown in FIG. 4, the voltage Ubus of the bus capacitor and the **current** voltage *uₐ* may be inputted into a divider, to obtain a feedforward quantity *uₐ* / Ubus of a closed-loop control result. The corrected target current value *I*_{*a_ref*2} and the current current *iₐ* are inputted into a controller, to obtain a feedback quantity of the closed-loop control result. Then, a difference between the feedforward quantity and the feedback quantity is used as a modulation wave and transmitted together with a carrier to a PWM generator, to obtain a duty cycle of the power factor correction (PFC) circuit, and the current on the alternating-current side may follow the corrected target current value in a manner of adjusting the duty cycle of the power factor correction circuit, to implement power factor correction.

In the foregoing technical solutions, the target current value on the alternating-current side is determined according to the current voltage and the steady-state target current on the alternating-current side of the charger; the target current value is then corrected by using the current correction amount; and the current on the alternating-current side is finally controlled according to the corrected target current value, the current voltage on the alternating-current side, the current current on the alternating-current side, and the voltage of the bus capacitor, to cause the current on the alternating-current side to follow the corrected target current value, thereby implementing power factor correction. The target current value is corrected by using the current correction amount, so that the accuracy of the corrected target current value can be ensured, and the current on the alternating-current side can closely follow the corrected target current value, thereby avoiding a deviation from occurring between a current of a positive half cycle and a current of a negative half cycle on the alternating-current side, and achieving a final objective of adjusting a degree of balance of an actual current on the alternating-current side, that is, achieving dynamic balance of an alternating-current.

The following describes in detail a specific manner of determining the steady-state target current on the alternating-current side. Specifically, the step may be implemented through the following step (1) and step (2):
(1). A target charging power on the alternating-current side is determined.

In the present disclosure, the target charging power is a power on the alternating-current side of the charger when the charger is in a stable and efficient optimal working state. Specifically, a minimum value in a maximum output power of the power grid, a current output power of the power grid, a maximum charging power of the battery allowed by a battery management system, a maximum power allowed by a wire, and a maximum charging power of the charger is determined as the target charging power.

For example, the maximum output power of the power grid and the maximum power allowed by the wire may be determined according to content in the national standard GBT 18487.1-2015; the current output power of the power grid may be determined through a power sensor arranged on the power grid in advance; the maximum charging power of the battery allowed by the battery management system may be determined according to related parameter information of the battery; and the maximum charging power of the charger may be determined according to hardware device selection of the charger, that is, belong to an inherent attribute parameter of the charger. The to-be-selected powers are respectively maximum powers corresponding to the power grid, the battery, the wire, and the charger, and the current output power of the power grid. Therefore, by selecting a minimum value as the target charging power, it may be ensured that during working of the charger, the power grid and the battery connected to the charger and wires connecting various parts are all in a safe working state, thereby reducing a possibility of a damaged electronic element on a related circuit. In addition, the power on the alternating-current side of the charger may be ensured to reach a maximum value while working safety is ensured. Therefore, if the power on the alternating-current side of the charger is the target charging power, the charger may be in the stable and efficient optimal working state.

(2) The steady-state target current on the alternating-current side is determined according to the target charging power.

**In the** present disclosure, the steady-state target current on the alternating-current side is a current value determined according to the target charging power. The steady-state target current may be determined according to a quotient of the target charging power and a valid value of an alternating-current voltage outputted by the power grid.

The following describes in detail a specific manner of determining the current correction amount on the alternating-current side. Specifically, the step may be implemented through the following step [1] and step [2]:
[1] A first preset quantity of currents on the alternating-current side are consecutively collected according to a first sampling periodicity.

**In** the present disclosure, the first preset quantity may be any set value, for example, 100, or may be an integer multiple of a quotient of a current periodicity on the alternating-current side and the first sampling periodicity, where the first sampling periodicity is far less than the current periodicity on the alternating-current side.

[2] The current correction amount on the alternating-current side is determined according to the first preset quantity of currents on the alternating-current side.

**In** an implementation, an average value of the first preset quantity of currents on the alternating-current side may be determined as the current correction amount on the alternating-current side.

**In** addition, from the analysis according to a principle of the sampling circuit on the alternating-current side, key factors affecting sampling include a resistance value of a dividing resistor of the sampling circuit and power supply of a sampling Hall or an operational amplifier. The difference in the resistance value of the dividing resistor can be made up by correction of a sampling formula, but an output characteristic of the Hall or the operational amplifier may be affected due to board-level power supply. The alternating-current voltage and the current are alternating-current values, so that zero-point crossing detection is very important. If a power supply voltage deviates, a sampling zero-point reference deviates, leading to a control error and a deviation between a current of a positive half cycle and a current of a negative half cycle, resulting in an unbalanced alternating-current.

Therefore, to further improve dynamic balance of the alternating-current, in addition to correcting the target current value in the working process of the charger, zero-point correction may be further performed on the sampling circuit on the alternating-current side before the charger starts to work, to avoid a zero-point deviation caused by an unstable voltage, thereby improving the dynamic balance of the alternating-current. Specifically, the method may further include the following steps:
zero-point correction is performed on the sampling circuit on the alternating-current side when the charger is powered on.

In the present disclosure, the charger includes three processes, namely, power-on, working, and power-off. An alternating-current voltage (that is, the power grid) is connected to the charger to power on the charger, and the charger is powered off when the alternating-current voltage is cut off, and a process in which the charger charges a battery of a vehicle is the working process.

Specifically, zero-point correction may be performed on the sampling circuit on the alternating-current side in a plurality of manners.

In an implementation, a sampled voltage AD value of the sampling circuit on the alternating-current side is corrected to implement zero-point correction on the sampling circuit on the alternating-current side.

Specifically, a second preset quantity of voltage AD values on the alternating-current side may be consecutively collected according to a second sampling periodicity; a correction amount of the sampled voltage AD value of the sampling circuit on the alternating-current side is then determined according to the second preset quantity of voltage AD values on the alternating-current side; and the sampled voltage AD value is finally corrected according to the correction amount of the sampled voltage AD value.

The second preset quantity may be any set value, for example, 100, or may be an integer multiple of a quotient of the current periodicity on the alternating-current side and the second sampling periodicity, where the second sampling periodicity is far less than the current periodicity on the alternating-current side.

For example, an average value of the second preset quantity of voltage AD values on the alternating-current side may be determined as the correction amount of the sampled voltage AD value of the sampling circuit on the alternating-current side; and a difference between the sampled voltage AD value and the correction amount of the sampled voltage AD value is determined as a corrected sampled voltage AD value.

In another implementation, a sampled current AD value of the sampling circuit on the alternating-current side is corrected to implement zero-point correction on the sampling circuit on the alternating-current side.

Specifically, a second preset quantity of current AD values on the alternating-current side may be consecutively collected according to a second sampling periodicity; a correction amount of the sampled current AD value of the sampling circuit on the alternating-current side is then determined according to the second preset quantity of current AD values on the alternating-current side; and the sampled current AD value is finally corrected according to the correction amount of the sampled current AD value.

For example, an average value of the second preset quantity of current AD values on the alternating-current side may be determined as the correction amount of the sampled current AD value of the sampling circuit on the alternating-current side; and a difference between the sampled current AD value and the correction amount of the sampled current AD value is determined as a corrected sampled current AD value.

In still another implementation, a sampled voltage AD value and a sampled current AD value of the sampling circuit on the alternating-current side are corrected to implement zero-point correction on the sampling circuit on the alternating-current side.

Specifically, a second preset quantity of voltage AD values and a second preset quantity of current AD values on the alternating-current side may be consecutively collected according to a second sampling periodicity; a correction amount of the sampled voltage AD value of the sampling circuit on the alternating-current side is determined according to the second preset quantity of voltage AD values on the alternating-current side, and a correction amount of the sampled current AD value of the sampling circuit on the alternating-current side is determined according to the second preset quantity of current AD values on the alternating-current side; and the sampled voltage AD value is finally corrected according to the correction amount of the sampled voltage AD value, and the sampled current AD value is corrected according to the correction amount of the sampled current AD value.

In addition, the charger control apparatus 5 may include:
a memory, having a computer program stored therein; and
a controller, the controller, when executing the computer program, implementing the steps of the charger control method according to the present disclosure.

The present disclosure further provides a vehicle, including the charger according to the present disclosure.

Exemplary implementations of the present disclosure are described in detail above with reference to the accompanying drawings, but the present disclosure is not limited to the specific details in the above implementations. Various simple variations may be made to the technical solutions of the present disclosure within the scope of the technical idea of the present disclosure, and such simple variations shall all fall within the protection scope of the present disclosure.

In addition, it should be noted that, specific technical features described in the foregoing specific implementations may be combined in any appropriate manner without conflict. To avoid unnecessary repetition, various possible combinations are not further described in the present disclosure.

In addition, the various implementations of the present disclosure may be combined arbitrarily without departing from the idea of the present disclosure, and such combinations shall also be considered as the content disclosed in the present disclosure.

## Claims

1. A charger control method, applied to a charger, the charger being an on-board charger or a charging pile charger, and the method comprising:
determining a target current value on an alternating-current side according to a current voltage and a steady-state target current on the alternating-current side of the charger;
correcting the target current value by using a current correction amount on the alternating-current side; and
controlling a current on the alternating-current side according to a corrected target current value, the current voltage, a current current on the alternating-current side, and a voltage of a bus capacitor, to cause the current on the alternating-current side to follow the corrected target current value.

2. The method according to claim **1,** wherein the current correction amount on the alternating-current side is determined in the following manner:
consecutively collecting a first preset quantity of currents on the alternating-current side according to a first sampling periodicity; and
determining the current correction amount on the alternating-current side according to the first preset quantity of currents on the alternating-current side.

3. The method according to claim 2, wherein the determining the current correction amount on the alternating-current side according to the first preset quantity of currents on the alternating-current side comprises:
determining an average value of the first preset quantity of currents on the alternating-current side as the current correction amount on the alternating-current side.

4. The method according to claim 2 or 3, wherein the first preset quantity is an integer multiple of a quotient of a current periodicity on the alternating-current side and the first sampling periodicity, wherein the first sampling periodicity is far less than the current periodicity on the alternating-current side.

5. The method according to any one of claims 1 to 4, wherein the current voltage and the current current on the alternating-current side of the charger are obtained in the following manner:
determining the current voltage on the alternating-current side according to a current voltage AD value on the alternating-current side of the charger collected by a sampling circuit on the alternating-current side, and determining the current current on the alternating-current side according to a current current AD value on the alternating-current side collected by the sampling circuit on the alternating-current side; and
the method further comprises:
performing zero-point correction on the sampling circuit on the alternating-current side when the charger is powered on.

6. The method according to claim 5, wherein the performing zero-point correction on the sampling circuit on the alternating-current side comprises:
correcting a sampled voltage AD value and/or sampled current AD value of the sampling circuit on the alternating-current side, to implement zero-point correction on the sampling circuit on the alternating-current side.

7. The method according to claim 6, wherein the correcting a sampled voltage AD value and/or sampled current AD value of the sampling circuit on the alternating-current side comprises:
consecutively collecting a second preset quantity of voltage AD values and/or current AD values on the alternating-current side according to a second sampling periodicity;
determining a correction amount of the sampled voltage AD value of the sampling circuit on the alternating-current side according to the second preset quantity of voltage AD values on the alternating-current side, and/or determining a correction amount of the sampled current AD value of the sampling circuit on the alternating-current side according to the second preset quantity of current AD values on the alternating-current side; and
correcting the sampled voltage AD value according to the correction amount of the sampled voltage AD value, and/or correcting the sampled current AD value according to the correction amount of the sampled current AD value.

8. A charger control apparatus (5), comprising:
a memory, having a computer program stored therein; and
a controller, the controller, when executing the computer program, implementing the steps of the method according to any one of claims 1 to 7.

9. A charger (100), comprising a power factor correction circuit (2), a bus capacitor (C1), and an LLC circuit (3) that are connected sequentially, and the charger (100) further comprising:
the charger control apparatus (5) according to claim 8, wherein the charger control apparatus (5) is connected to the power factor correction circuit (2) and the LLC circuit (3) separately.

10. A vehicle, comprising a battery (4) and the charger (100) according to claim 9.
